# FASCICULE DE BREVET EUROPEEN

(11) **EP 0 449 692 B1**
(45) Date de publication et mention de la délivrance du brevet: **25.01.1995**
(21) Numéro de dépôt: 91400680.4
(22) Date de dépôt: 13.03.1991
(51) Int. Cl.: F16N 13/22, F01B 1/00, F16N 13/06, F04B 1/00

(54) **Pompe modulaire à plusieurs sorties alimentées chacune par un élément de pompage**
Modulare Pumpe mit mehreren Auslässen, jeder versorgt durch eine Pumpeinheit
Modular pump with plural outlets, each supplied by a pump unit

(30) Priorité: 26.03.1990 FR 9003832
(43) Date de publication de la demande: 02.10.1991
(73) Titulaire: CONSORTIUM DE RECHERCHES POUR L'APPLICATION DES FLUIDES, CRAF, F-49650 Brain sur Allonnes (FR)
(72) Inventeur: Javelly, Christian, F-49650 Allonnes (FR); Paris, René, St.Hilaire St. Florent, F-49400 Saumur (FR)
(74) Mandataire: Casalonga, Axel

(56) Documents cités:
- DE-A- 2 635 166
- US-A- 2 160 978
- US-A- 2 739 671

## Description

La présente invention se rapporte à une pompe modulaire avec plusieurs éléments de pompage actionnés par une commande extérieure commune, et avec plusieurs sorties alimentées chacune par l'un desdits éléments de pompage.

Dans les pompes connues de ce type utilisées par exemple pour la distribution quantités dosées de lubrifiants liquides et visqueux vers plusieurs points à lubrifier, le corps de pompe contient un nombre prédéterminé d'éléments de pompage formés chacun d'un cylindre ménagé sous la forme d'un alésage de diamètre prédéterminé dans le corps de pompe, et d'un piston de course prédéterminée monté dans ledit cylindre. Par conséquent, chaque pompe a un nombre de départs ou de sorties prédéterminé par le nombre de cylindres, et chaque élément de pompage a une capacité prédéterminée par le diamètre et la course du piston monté dans le corps de pompe.

Une telle structure de pompe présente l'inconvénient que si l'on désire modifier le nombre de sorties de la pompe et/ou la capacité de chaque élément de pompage, il est nécessaire d'usiner le corps de pompe an fonction de ces caractéristiques.

On connaît par le brevet US-A-2 160 978, une pompe d'alimentation de carburant pour moteur à combustion interne. La pompe comprend plusieurs éléments de pompage sous forme de cartouches montées dans des alésages parallèles d'un disque de support qui est fixé dans le carter de la pompe. Chaque cartouche est traversée axialement par un alésage formant cylindre pour recevoir un piston. Ce document qui propose une pompe modulaire avec des éléments de pompage amovibles ne prévoit pas non plus la possibilité de modifier les caractéristiques de fonctionnement de la pompe pour les adapter aux conditions d'utilisation de la pompe.

La présente invention a pour but de remédier à ces inconvénients par une pompe modulaire conçue de manière qu'à partir d'un corps de pompe unique, il soit possible de réaliser des pompes avec un nombre variable de sorties et une capacité variable de chaque élément de pompage. L'invention a par ailleurs pour but de réaliser une pompe modulaire conçue de manière à simplifier le démontage des éléments de pompage et le remontage des éléments de pompage, éventuellement après leur échange contre des éléments de pompage de même capacité ou de capacité différente. De plus, l'invention a pour but de réaliser une pompe modulaire dont le corps de pompe peut être fabriqué suivant des procédés simples et à partir de matériaux peu coûteux.

La pompe modulaire conforme à l'invention comporte plusieurs éléments de pompage comprenant chacun un piston coulissant dans un cylindre à l'intérieur d'un corps de pompe commun. Les pistons sont actionnés dans le sens de pompage par une commande extérieure commune, à l'encontre de l'action de ressorts de rappel. La pompe comporte plusieurs sorties alimentées chacune par l'un desdits éléments de pompage. Selon l'invention, chaque élément de pompage comprend une cartouche traversée axialement par un alésage formant cylindre recevant un piston, lesdites cartouches pouvant présenter des cylindres et des pistons de diamètres différents. Le corps de pompe comporte plusieurs alésages parallèles pouvant recevoir au choix lesdites cartouches ou des cartouches pleines sans cylindre et sans piston.

De préférence, les cartouches sont maintenues dans les alésages du corps de pompe par un couvercle rapporté sur le corps de pompe à l'opposé de la commande extérieure et délimitant avec le corps de pompe une chambre d'alimentation communiquant avec un réservoir sous charge et avec les cylindres des cartouches.

L'alésage de chaque cartouche est de préférence subdivisé, dans le sens axial, en une section de guidage de piston tournée vers la commande extérieure et en une section de cylindre tournée vers le couvercle. Chaque cartouche est montée dans un alésage du corps de pompe par sa partie correspondant à ladite section de guidage et est munie de moyens de liaison faisant communiquer ladite chambre d'alimentation avec son alésage entre lesdites deux sections. Les pistons sont montés dans les cartouches de manière à dégager lesdits moyens de liaison et lesdites sections de cylindre sous l'action des ressorts de rappel lorsqu'ils ne sont pas actionnés par la commande extérieure.

Les pistons peuvent être avantageusement rappelés vers la commande extérieure par des ressorts prenant appui sur les cartouches.

Suivant un mode de réalisation préféré, les pistons sont actionnés par la commande extérieure par l'intermédiaire d'un plateau commun comportant un embout de centrage guidé dans le corps de pompe.

Pour modifier simultanément la capacité de tous les éléments de pompage de la pompe, il est avantageux qu'une cale échangeable contre une cale de hauteur différente soit disposée entre ledit plateau actionnant les pistons et l'organe de sortie à course fixé de la commande extérieure.

De préférence, les cartouches comportent un clapet de retenue à leur extrémité tournée vers les sorties.

Les orifices de sorite peuvent être pratiqués dans le couvercle en alignement avec les cartouches, les ressorts de rappel des clapets de retenue prenant appui contre des raccords de sortie vissés dans lesdits orifices.

En se référant aux dessins annexés, on va décrire ci-après plus en détail un mode de réalisation illustratif et non limitatif d'une pompe conforme à l'invention; sur les dessins :
la figure 1 est une coupe axiale d'une pompe conforme à l'invention à quatre sorties;

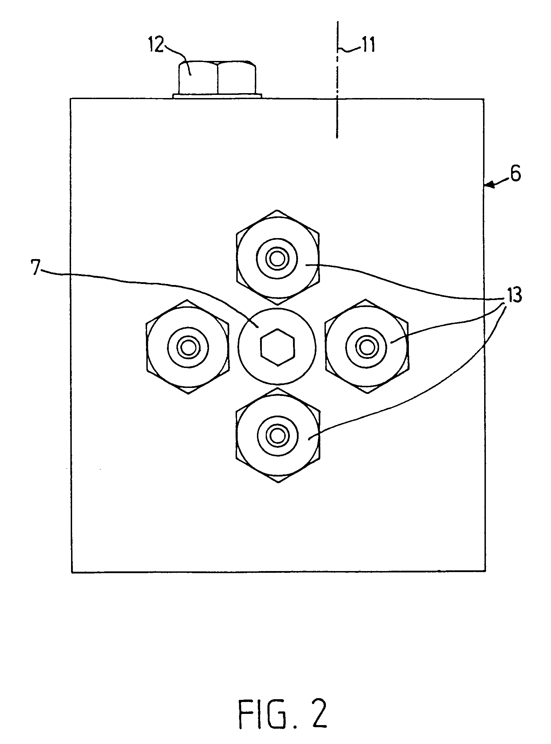

la figure 2 est une vue de la pompe depuis le côté des sorties.

La pompe illustrée par les dessins comprend un corps de pompe 1 sur l'une des extrémités duquel est fixé un électro-aimant 2 par des vis non représentée.

Dans le corps de pompe 1 sont ménagés quatre alésages étagés 3 parallèles, identiques, dont les axes sont répartis, à 90° les uns des autres, sur un même cercle centré sur l'axe central 4 du corps de pompe 1. Chaque alésage étagé 3 reçoit une cartouche de pompage 5 maintenue dans son alésage 3 par un couvercle 6 fixé au corps de pompe 1 sur l'extrémité opposée à l'électro-aimant 2.

Dans l'exemple représenté, le couvercle 6 est fixé au corps de pompe 1 à l'aide d'une vis centrale 7, le centrage et le positionnement correct du couvercle 6 par rapport au corps de pompe 1 étant assurés par un embout de centrage 8 annulaire du corps de pompe 1 et par un pied de centrage 9.

Le couvercle 6 délimite avec le corps de pompe 1 une chambre 10 qui est alimentée en fluide à distribuer à partir d'un réservoir en charge non représenté connecté à un orifice 11 ménagé dans le couvercle 6, orifice dont seul l'axe est représenté. La chambre 10 peut être purgée au moyen d'un bouchon de purge 12.

Le couvercle 6 comporte par ailleurs quatre raccords de sortie 13 vissés dans quatre orifice de sortie 14 ménagés dans le couvercle 6 en alignement avec les alésages 3 du corps de pompe 1.

Chaque cartouche de pompage 5 est traversée sur toute sa longueur par un alésage axial 15 dans lequel est monté coulissant un piston 16 sollicité en direction de l'électro-aimant de commande 2 par un ressort de rappel 17 qui prend appui sur la cartouche 5 et sur une tête 18 que le piston 16 comporte à son extrémité tournée vers l'électro-aimant de commande 2. Sous l'effet des ressorts de rappel 17, les têtes 18 de tous les pistons 16 sont appliquées contre un plateau 19 monté mobile axialement dans le corps de pompe 1 en étant centré dans ce dernier par un embout de centrage 20 coulissant dans un trou borgne axial 21 du corps de pompe 1. Il est à noter que l'embout de centrage 20 présente un profil polygonal et que le trou 21 est cylindrique, ce qui évite à l'embout d'agir à la manière d'un piston dans le trou.

Le corps de la cartouche 5 est subdivisé en une section 22 de guidage du piston 16 et en une section 23 de pompage qui contient l'alésage ou cylindre de pompage proprement dit. Des trous transversaux 24 ménagés dans le corps de la cartouche 5 entre lesdites deux sections 22, 23 permettent au cylindre de pompage 25 de la section 23 de communiquer avec la chambre 10 lorsque le piston 16 est rappelé en position de repos par son ressort 17.

Il est à noter que l'alésage 15 présente le même diamètre dans la section 22 de guidage du piston 16 et dans la section 23 de pompage correspondant au cylindre de pompage 25.

A son extrémité tournée vers le couvercle 6, chaque cartouche 5 reçoit un clapet anti-retour 26 comprenant un corps porte-joint 27 monté coulissant dans une section élargie 28 de l'alésage 15 du corps de cartouche 5, à l'extrémité tournée vers le couvercle 6. Le corps porte-joint 27 porte un joint 29 par lequel il est appliqué contre le fond de la section élargie 28 de l'alésage 15 sous l'action d'un ressort de rappel 30 prenant appui sur le raccord de sortie 13. Il est à noter que le corps porte-joint 27 est prolongé vers la sortie par un embout 31 qui dépasse quelque peu la face extérieure du couvercle 6.

Un joint d'étanchéité 32 est prévu entre chaque cartouche 5 et l'alésage 3 du corps de pompe 1 recevant cette cartouche. Par ailleurs, un joint d'étanchéité 33 est prévu entre chaque cartouche 5 et le piston 16 coulissant dans cette dernière. Un joint d'étanchéité 34 est par ailleurs prévu entre chaque cartouche 5 et le couvercle 6. Enfin, un joint d'étanchéité 35 est prévu entre l'embout de centrage 8 du corps de pompe 1 et le couvercle 6.

Un orifice de drainage 36 est par ailleurs prévu dans le corps de pompe 1, cet orifice 36 communiquant avec la chambre 37 prévue entre le corps de pompe 1 et l'électro-aimant de commande 2 pour recevoir le plateau 19. Cet orifice de drainage 36 permet d'évacuer les légères fuites de liquide qui pourraient se produire à la longue entre les cartouches 5 et les pistons 16 coulissant dans ces dernières.

Entre le plateau 19 et le poussoir 38 par lequel l'électro-aimant 2 commande la pompe, il est prévu une cale 39 dont la fonction apparaîtra par la suite.

Enfin, le corps de pompe 1 comporte des trous de fixation 40 destinés à la fixation par vis de l'ensemble de la pompe sur un support non représenté.

On va décrire ci-après le fonctionnement de la pompe conforme à l'invention.

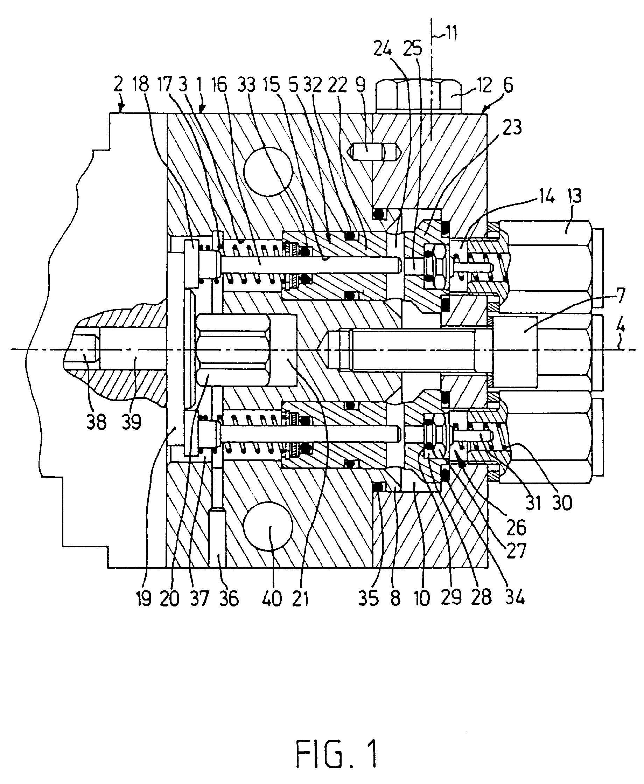

Tant que l'électro-aimant 2 n'est pas excité, les pistons 16 se trouvent, sous l'action des ressorts 17, à la position de repos représentée sur la figure 1, dans laquelle les pistons 16 dégagent les cylindres de pompage 25. Ainsi, le liquide contenu dans la chambre 10 pénètre dans et remplit les cylindres 25 qui sont fermés côté sortie par les clapets 26.

Lors de la mise sous tension de l'électro-aimant 2, le plateau 19 est actionné vers la droite sur la figure 1 par le poussoir 37 et la cale 38 et enfonce les pistons 16 dans les cylindres 25. Le liquide contenu dans les cylindres 25 se trouve ainsi comprimé et, après soulèvement des clapets 26 de leurs sièges, chassé vers la sortie jusqu'à ce que les pistons 16 soient arrivés en fin de course.

Lorsque l'électro-aimant 2 est ensuite mis hors tension, les ressorts 17 ramènent les pistons 16 à la position de repos, les clapets 26 étant fermés par les ressorts 30.

Sous l'effet de la dépression créée dans les cylindres de pompage 25 lors du rappel des pistons 16 à la position de repos, le liquide contenu dans la chambre 10 est aspiré dans les cylindres 25 au moment où les pistons 16 quittent les cylindres 25 et dégagent les trous 24.

Par conséquent, chaque fois que l'électro-aimant 2 est mis sous tension, chaque piston 16 envoie par le raccord de sortie 13 correspondant un volume de liquide qui est fonction de la course et du diamètre du piston 16.

Il existe deux possibilités pour modifier le débit par chaque sortie de la pompe.

D'une part le remplacement de la cale 39 par une cale d'une hauteur différente entraîne une modification correspondante de la course de chacun des pistons 16, donc une variation correpondante du débit de liquide distribué par chacune des sorties de la pompe.

D'autre part, le remplacement des différentes cartouches 5 par des cartouches ayant des pistons de diamètre différent permet de faire varier individuellement le débit à chaque sortie de la pompe.

Par ailleurs, le remplacement d'une cartouche de pompage par une fausse cartouche, c'est-à-dire une cartouche pleine sans piston, permet de modifier le nombre de sorties de la pompe, cette fausse cartouche ayant uniquement une fonction d'étanchéité.

Il est à noter à ce sujet que le remplacement des cartouches est une opération simple et rapide n'entraînant aucune modification des éléments importants de la pompe (corps 1 et couvercle 6), les cartouches étant de simples pièces de révolution dont la fabrication est simple et peu onéreuse.

Du fait que les frottements se produisent uniquement entre les cartouches 5 et les pistons 16, le corps de pompe 1 et le couvercle 6 peuvent être réalisés par exemple par fonderie sous pression à partir d'alliages n'ayant pas de caractéristiques particulières de résistance au frottement. Cela réduit le coût du corps de pompe et du couvercle.

Le frottement qui peut se produire entre l'embout de centrage 20 du plateau 19 et le corps de pompe 1 est faible, mais il est possible de concevoir un chemisage du trou 21 du corps de pompe 1 en cas de nécessité.

Les embouts 31 prévus sur les corps porte-joint 27 des clapets 26 permettent, après dévissage des raccords de sortie 13, de retirer aisément les clapets 26, par exemple à des fins de nettoyage, sans avoir à démonter le couvercle 6.

Par ailleurs, pour avoir accès aux cartouches 5, il est possible, soit de démonter le couvercle 6 sans toucher au corps de pompe 1, soit, si cela est difficile pour des raisons d'encombrement ou du fait de la présence de conduits rigides reliés aux raccords de sortie 13, de retirer les vis de fixation traversant des trous 40 du corps de pompe 1 et, après avoir enlevé la vis 7, de déplacer l'ensemble du corps de pompe 1 et de l'électro-aimant 2 vers la gauche sur la figure 1 pour accéder aux cartouches, sans toucher au couvercle 6.

La pompe conforme à l'invention peut être utilisée de préférence pour la distribution séquentielle de lubrifiant liquide ou visqueux, notamment de volumes de 5 à 50 mm³ à chaque séquence par chaque sortie.

L'électro-aimant de commande 2 pourrait être remplacé par exemple, par un vérin à commande pneumatique ou hydraulique.

## Revendications

1. Pompe modulaire avec plusieurs éléments de pompage comprenant chacun un piston (16) coulissant dans un cylindre (15, 25) à l'intérieur d'un corps de pompe (1) commun, les pistons étant actionnés dans le sens de pompage par une commande extérieure commune (2), à l'encontre de l'action de ressorts de rappel (17), la pompe comportant plusieurs sorties (13), alimentées chacune par l'un desdits éléments de pompage, chaque élément de pompage comprenant une cartouche (5) traversée axialement par un alésage (15, 25) formant cylindre recevant un piston (16), le corps de pompe (1) comportant plusieurs alésages (3) identiques, parallèles, pour recevoir lesdites cartouches, caractérisée par le fait que lesdites cartouches peuvent présenter des cylindres et des pistons de diamètres différents, et que lesdits alésages (3) du corps de pompe reçoivent au choix lesdites cartouches (5) ou des fausses cartouches sans cylindre et sans piston.

2. Pompe suivant la revendication 1, caractérisée par le fait que les cartouches (5) sont maintenues dans les alésages (3) du corps de pompe (1) par un couvercle (6) rapporté sur le corps de pompe à l'opposé de la commande commune (2) et délimitant avec le corps de pompe une chambre (10) communiquant avec un réservoir sous charge et avec les cylindres (25) des cartouches.

3. Pompe suivant la revendication 2, caractérisée par le fait que l'alésage desdites cartouches est subdivisé dans le sens axial en une section (15) de guidage de piston tournée vers la commande (2) et en une section de cylindre (25) tournée vers le couvercle (6), les cartouches étant montées dans les alésages (3) du corps de pompe par les parties correspondant auxdites sections de guidage et étant munies de moyens d'alimentation (24) faisant communiquer ladite chambre (10) avec l'alésage des cartouches entre lesdites deux sections, et que les pistons (16) sont montés dans les cartouches (3) de manière à dégager lesdits moyens d'alimentation (24) et lesdites sections de cylindre (25) sous l'action des ressorts de rappel (17), lorsqu'ils ne sont pas actionnés par la commande ( 2 ).

4. Pompe suivant l'une quelconque des revendications précédentes, caractérisée par le fait que les pistons (16) sont rappelés vers la commande (2) par des ressorts (17) prenant appui sur les cartouches (5).

5. Pompe suivant l'une quelconque des revendications précédentes, caractérisée par le fait que les pistons (16) sont actionnés par la commande (2) par l'intermédiaire d'un plateau commun (19) comportant un embout de centrage (20) guidé dans le corps de pompe (2).

6. Pompe suivant la revendication 5, caractérisée par le fait qu'une cale (39) échangeable contre une cale de hauteur différente est disposée entre la commande (2) et ledit plateau (19).

7. Pompe suivant l'une quelconque des revendications précédentes, caractérisée par le fait que les cartouches (5) renferment un clapet de retenue (26) à leur extrémité tournée vers les sorties.

8. Pompe suivant la revendication 7, caractérisée par le fait que des orifices de sortie (14) sont pratiqués dans le couvercle (6) en alignement avec les alésages (3) recevant les cartouches (5) et que les ressorts de rappel (30) des clapets de retenue (26) prennent appui contre les raccords de sortie (13) vissés dans lesdits orifices de sortie (14).

9. Pompe suivant l'une quelconque des revendications précédentes, caractérisée par le fait que le corps de pompe (1) et le couvercle (6) comportent des moyens complémentaires (8, 9) de centrage et de positionnement.

## Patentansprüche

1. Modular aufgebaute Pumpe mit mehreren Pumpelementen, von denen jedes einen in einem Zylinder (15, 25) im Inneren eines gemeinsamen Pumpenkörpers (1) verschiebbaren Kolben (16) aufweist, wobei die Kolben durch einen gemeinsamen äußeren Antrieb (2) entgegen der Wirkung von Rückstellfedern (17) im Pumpsinne angetrieben sind, wobei die Pumpe mehrere Auslässe (13) aufweist, von denen jeder durch eines der Pumpelemente gespeist wird, wobei jedes Pumpelement einen Einsatz (5) aufweist, der in axialer Richtung von einer Bohrung (15, 25) durchsetzt ist, die einen einen Kolben (16) aufnehmenden Zylinder bildet, wobei der Pumpenkörper (1) mehrere gleiche, parallele Bohrungen (3) aufweist, um die Einsätze aufzunehmen, dadurch gekennzeichnet, daß die Einsätze Zylinder und Kolben mit unterschiedlichen Durchmessern aufweisen können und daß die Bohrungen (3) des Pumpenkörpers wahlweise die vorgenannten Einsätze (5) oder Blindeinsätze ohne Zylinder und ohne Kolben aufnehmen.

2. Pumpe nach Anspruch 1, dadurch gekennzeichnet, daß die Einsätze (5) in den Bohrungen (3) des Pumpenkörpers (1) durch einen an dem Pumpenkörper dem gemeinsamen Antrieb (2) gegenüberliegend angebrachten Deckel (6) gehalten sind, der zusammen mit dem Pumpenkörper eine Kammer (10) begrenzt, die mit einem befüllten Behälter und mit den Zylindern (25) der Einsätze in Verbindung steht.

3. Pumpe nach Anspruch 2, dadurch gekennzeichnet, daß die Bohrung der Einsätze in axialer Richtung in einen dem Antrieb (2) zugewandten Kolbenführungsabschnitt (15) und einen dem Deckel (6) zugewandten Zylinderabschnitt (25) unterteilt ist, daß die Einsätze in den Bohrungen (3) des Pumpenkörpers durch die den Führungsabschnitten entsprechenden Teile befestigt sind und mit Zuleitungsmitteln (24) versehen sind, die die Kammer (10) mit der Bohrung der Einsätze zwischen den zwei Abschnitten in Verbindung setzen, und daß die Kolben (16) in den Einsätzen (5) derart angeordnet sind, daß sie die Zuleitungsmittel (24) und die vorgenannten Zylinderabschnitte (25) unter der Einwirkung der Rückstellfedern (17) freigeben, wenn sie von dem Antrieb (2) nicht betätigt sind.

4. Pumpe nach einem der vorstehenden Ansprüche, dadurch gekennzeichnet, daß die Kolben (16) von den sich auf den Einsätzen (5) abstützenden Federn (17) zu dem Antrieb (2) hin zurückgestellt werden.

5. Pumpe nach einem der vorstehenden Ansprüche, dadurch gekennzeichnet, daß die Kolben (16) von dem Antrieb (2) mittels einer gemeinsamen Scheibe (19) angetrieben sind, die einen in dem Pumpenkörper (1) geführten Zentrieransatz (20) aufweist.

6. Pumpe nach Anspruch 5, dadurch gekennzeichnet, daß zwischen dem Antrieb (2) und der Scheibe (19) ein gegen ein Distanzstück unterschiedlicher Länge auswechselbares Distanzstück (39) angeordnet ist.

7. Pumpe nach einem der vorstehenden Ansprüche, dadurch gekennzeichnet, daß die Einsätze (5) an ihrem den Auslässen zugewandten Ende jeweils ein Rückschlagventil (26) enthalten.

8. Pumpe nach Anspruch 7, dadurch gekennzeichnet, daß die Auslaßöffnungen (14) in dem Deckel (6) fluchtend mit den die Einsätze (5) aufnehmenden Bohrungen (3) angeordnet sind und daß sich die Rückstellfedern (30) der Rückschlagventile (26) auf den in die Auslaßöffnungen (14) eingeschraubten Auslaßanschlußteilen (13) abstützen.

9. Pumpe nach einem der vorstehenden Ansprüche, dadurch gekennzeichnet, daß der Pumpenkörper (1) und der Deckel (6) komplementäre Mittel (8, 9) zur Zentrierung und Positionierung aufweisen.

## Claims

1. A modular pump with several pump units, each comprising a piston (16) sliding inside a cylinder (15,25) in a common pump body (1), the pistons being actuated in the pumping direction by a common external control (2), against the action of return springs (17), the pump comprising several outlets (13), each supplied by said pump units, each pump unit comprising a cartridge (5) penetrated axially by a bore (15,25) forming a cylinder receiving a piston (16), the pump body (1) comprising several identical and parallel bores (3), to receive said cartridges, characterized by the fact that said cartridges can have cylinders and pistons of different diameters, and further characterized by the fact that said bores (3) of the pump body can receive either said cartridges (5) or dummy cartridges without cylinder and without piston.

2. The pump of Claim 1, characterized by the fact that the cartridges (5) are held in the bores (3) of the pump body (1) by a lid (6) added on to the pump body opposite the common control (2) and delimiting, with the pump body, a chamber (10) communicating with a tank under load and with the cylinders (25) of the cartridges.

3. The pump of Claim 2, characterized by the fact that the bore of said cartridges is subdivided in the axial direction into a piston guide section (15) facing the control (2), and a cylinder section (25) facing the lid (6), the cartridges being mounted in the bores (3) of the pump body by the portions corresponding to said guide sections and being equipped with supplying means (24) causing said chamber (10) to communicate with the bore of the cartridges between said two sections, and further characterized by the fact that the pistons (16) are mounted in the cartridges (3) in such a way as to disengage said supplying means (24) and said cylinder sections (25) under the action of the return springs (17), when they are not actuated by the control (2).

4. The pump of any of the preceding claims, characterized by the fact that the pistons (16) are returned to the control (2) by springs (17) bearing against the cartridges (5).

5. The pump of any of the preceding claims, characterized by the fact that the pistons (16) are actuated by the control (2) through the intermediary of a common plate (19) comprising a centering nipple (20) guided in the pump body (2).

6. The pump of Claim 5, characterized by the fact that a spacer (39), replaceable by a spacer of different height, is placed between the control (2) and said plate (19).

7. The pump of any of the preceding claims, characterized by the fact that the cartridges (5) contain a check valve (26) at their end facing the outlets.

8. The pump of Claim 7, characterized by the fact that outlet ports (14) are made in the lid (6) in alignment with the bores (3) receiving the cartridges (5), and further characterized by the fact that the return springs (30) of the check valves (26) bear against the outlet couplings (13) screwed into said outlet ports (14).

9. The pump of any of the preceding claims, characterized by the fact that the pump body (1) and the lid (6) comprise complementary centering and positioning means (8,9).
